# EUROPEAN PATENT SPECIFICATION

(11) **EP 1 585 045 B1**
(45) Date of publication and mention of the grant of the patent: **16.08.2006**
(21) Application number: 04701367.7
(22) Date of filing: 12.01.2004
(51) Int. Cl.: G06Q 50/00

(54) **SURVEYING SYSTEM WITH REMOTE-CONTROLLED VIDEO RECORDING**
VERMESSUNGSSYSTEM MIT FERNGESTEUERTER VIDEOAUFZEICHNUNG
SYSTEME D'EXPERTISE DANS LEQUEL EST UTILISE UN ENREGISTREMENT VIDEO COMMANDE A DISTANCE

(30) Priority: 13.01.2003 ES 200300064
(43) Date of publication of application: 12.10.2005
(73) Proprietor: Servicios Tecnologicos Para la Peritacion S.L., 08205 Sabadell (ES)
(72) Inventor: BOSCH I PALMA, Antonio, E-08205 Sabadell (ES)
(74) Representative: Revenga Santos, Josep Lluís
(86) International application number: PCT/ES2004/000009
(87) International publication number: WO 2004/063953

(56) References cited:
- EP-A1- 0 644 501
- DE-A1- 10 102 922
- ES-A1- 2 178 970

## Description

### OBJECT OF THE INVENTION

The aim of this Invention application is to patent a Remote Claim Adjustment System that comprises a network of robotised claim adjustment platforms that are connected to a central server known as a Call-Centre that controls them remotely, by means of a telephone network or another similar type of communication, which provides several advantages to the function that is the object of the invention and these will be explained later, as well as other advantages that are inherent to the way it is organised and constituted.

The Remote Claim Adjustment System has essentially been conceived to carry out, remotely and without it being necessary for an adjuster to go to the location, real time insurance adjustments and estimates of vehicles that have been involved in accidents and have to be subjected to all the requirements that are established by the insurance companies, so that the vehicles concerned can eventually be repaired and the insurance companies can be responsible for the payment thereof, thus introducing into the system the concept of externalising the task of adjustment so that it does not take place in the mechanic's workshop or at the adjustment centre and so that the process can be carried out by the car driver or insurance company client, in environments whose purpose is very different from claim adjustment, such as petrol stations or services stations, shopping centres, centres that sell spare parts for automobiles, etc., and the system can likewise used for other aims.

### BACKGROUND TO THE INVENTION

For all the systems that are currently available and that can be applied to adjustment activities in situations where an accident has taken place, clients of the insurance company first have to report their accidents to the insurance company, and after having done so they have to take their vehicles to the workshop where they are to be repaired and leave them there until such time as the company adjuster can go there personally to perform the adjustment, and this can take from between several hours to several days, with all the inconveniences that this can cause. On the one hand, the workshops have no alternative but to keep the vehicles on their premises, taking up room that is often necessary for other activities, and on the other hand, this also means that the insured parties who have had an accident or whose vehicles have been otherwise damaged will be without their vehicles for a longer period of time than is necessary.

Other systems for carrying out adjustments that are not directly witnessed also exist and these are used by certain insurance companies, including such systems as direct sale, which consists of an agreement between those companies and the personnel at the workshops where the vehicles are to be repaired, which involve the latter using a digital camera or similar to take photographs of the damaged vehicles, these photographs then being sent by e-mail to the adjustment centre belonging to the company concerned. The claim adjustment is made on the basis of the photographs in question, but this system has several drawbacks, one of which is that the adjuster needs further photographs to carry out the adjustment correctly, which adds a considerable amount of time involved before the repair process can be started. This system also involves an increase in the risk of the repair workshop or the client indulging in fraudulent actions that could manipulate the real situation to their advantage, and it is difficult to check the truth about the damage to the vehicle, because the workshop could replace undamaged parts before the adjustment takes place. All in all, with this method the adjusters merely receive information that they subsequently process, but they do not play the major role where the real time information is concerned, because they are always subordinated to the will of third parties.

A video adjustment system has also been used, which involves a philosophy that is similar to the one used for the adjustment by photo system, in view of the fact that the personnel at the repair workshop have to hold the video camera while it is viewed by the adjuster at the other end, while the camera is connected to a system similar to a videoconference.

In neither the photo system nor the video adjustment system does the adjuster control the time or the characteristics of the environment (the light, the position of the personnel in the repair workshop, the quality of the filming or the camera, the connection time, etc. ), and there is a further drawback that must be taken into account when it is the repair workshop that takes the photographs or the video, which lies in the fact that the workshop must have personnel available to take the time to carry this out, at an economic cost to the latter, which is greater if one takes into consideration the technological investment that is required, because it means that the repair workshop must be equipped with digital cameras, computers prepared for this purpose or video cameras.

In the systems described above, the insurance company adjusters do not have a strict control over the damaged vehicle, which is one of the basic concerns regarding adjustment, and it is fairly common practice in cases of vehicle accidents that the insured parties try to deceive the insurance companies, so that the latter pay for damage to the vehicles that has taken place in other situations, such as scratches to the paintwork caused when parking the vehicle or opening doors. Even when the adjusters are in agreement with the repair workshops, additions are made to the actual damage that occurred in the accidents, so that the repair costs are higher than they should really be.

It is a fact that a Surveying System Unit Remote-Controlled Video Recording has been patented as EP 644.501, which is a device for adjusting the claim for a vehicle that has had an accident or been otherwise damaged, in which a description is given and claims made for a trolley (10) that supports a digital video camera (34) that is connected to a computer (14) to which it transmits the images that are recorded of a vehicle (12). The computer is, in turn, connected via a communications network (16) to an information processing system (18) that is installed in the offices of a local, regional or national claim adjustment centre.

It is also a fact that a Surveying System Unit Remote-Controlled Video Recording has been patented as Patent DE 10102922, which is a device with two side supports (3), an upper cross beam (2) and a vertical arm (4) that supports a camera (7) by means of a ball joint that enables it to be swivelled into any position or direction. The images that are taken by the camera are then used to obtain the three-dimensional coordinates for a variety of point that lie on the surface of different sets of automobile components, which are subsequently compared with a series of design values, with a view to establishing the assembly quality of the aforementioned sets.

### DESCRIPTION OF THE INVENTION

The object of this Invention Patent is to rectify the imbalances referred to above by means of a Remote Claim Adjustment System that mainly consists of dispensing with the time it takes for the adjusters to go to the repair workshop, maintaining all the functions that the adjusters can perform personally in the vehicle repair workshop, while at the same time enabling the clients to carry on using their vehicles until it is eventually repaired, after it has spent a period of time on the adjustment platform, in those cases where the accident has not made it impossible to drive the affected vehicles in a normal way.

Therefore, the Remote Claim Adjustment System manages to achieve the following: standardising and homogenising the image collection system; it brings about a major reduction in the cost of adjustment; it makes it unnecessary for the adjuster to go along to the place where the repair workshop is located; the system also reduces the added expense incurred due to fraud; the user of the vehicle can also check the damage that has been assessed; a 90 % reduction is achieved in the time that is spent on carrying out the adjustment of the vehicle; and finally a major reduction is achieved in the time that is spent on the entire accident repair process.

However, there are also a series of other parallel services that serve to supplement this Remote Claim Adjustment System, which in the case of the repair workshops helps them to arrange for the purchasing of spare parts and components as well as making it easier for them to manage their stock. It is also important to point out that the accident adjustment and repair time is shortened, and a reduction is also brought about in the time taken for the insurance companies to pay for the accident repairs, in view of the fact that an electronic payment platform is built into the system; the insurance companies are also benefited by the fact that their administrative costs are also cut in the process involved in paying the repair workshops, they also have to pay out less for the aforementioned fraudulent claims and, finally, the users of the damaged vehicles will also feel the benefits of this system because they will have access to the information and the availability of the repair workshops in helping them to get their vehicles repaired in as short a time as possible.

The Remote Claim Adjustment System is basically outstanding because it decentralises the adjusters' work where the repair workshop is concerned, given that it applies the technology that is involved in that process, and its main components are as follows:

A central server known as an adjustment Call-Centre, which is the physical zone where the adjusters are located and from where the entire communication and adjustment process is controlled, the main functions of which are to control the entire flow of information that is generated by the system, that is to say, it receives from the insurance company, the information about the accident (the accident report form, the place where the vehicle is and the report form from the other party if the latter's company uses the same system, the circumstances in which it is possible to check the truth about the circumstances surrounding the accident, etc.), preparing the adjusters' reports for the insurance companies, furnishing the information that has been generated by the accident adjustment process, and the adjustment itself.

A Communications Network, which basically uses the ISDN to provide the system with the greater requirements that it needs where sending the files in video format ( OFF-line system) is concerned, and because it offers more extensive geographical coverage, as well as sending the images in real time ( ON-line system ), but which can also use any other communications system that is suitable for sending the relevant data and images, such as UMTS for 3^{rd} generation mobile phones that is suitable for sending video images or the LMDS system, or others that are suitable for facilities and installations that are located in remote areas and/or zones that are not equipped with the required infrastructure, this is the tool by means of which the Call-Centre and the Remote Claim Adjustment Platforms are linked.

And a series of Remote Claim Adjustment Platforms, whose number can be unlimited, located at different sites, which can be either repair workshops or other centres that are associated with the system ( such as shopping centres, service stations, petrol stations, amongst others) where the activity can be carried out, this being the tool that the adjusters use remotely to perform the adjustment on the accident damaged vehicles.

This Platform comprises a structure in the form of a bridge, which is large enough for a vehicle to be placed under it, equipped with wheels so that it can be moved, and provided with a systems of mobile, revolving and extendable arms that are operated by conventional electromechanical systems that include a video camera, which can be moved around, equipped with its own lighting system that can reach any angle of the vehicle that lies within its range of action, and which can be extracted from its position to be manually examined on the instructions of the adjuster, in exceptional cases.

The aforementioned platform is provided with a computer terminal that is equipped with all the suitable hardware and software systems, screens or displays, keyboard, loudspeaker, a microphone with an automatic telephone dialling system, a scanner and a printer, in order to keep the connection between the adjuster located in the Call-Centre and the Accident Adjustment Platform for handling it; that is to say, from the positioning of the arms, the orientation and the approach of the camera, as well as communication not only with the user of the accident damaged vehicle and the personnel at the repair workshop, whenever this is necessary.

With a view to helping to give a better understanding of the characteristics of the invention, in accordance with an example of a preferred embodiment of a practical realisation thereof, the description that is being given is supplemented with a set of plans that is enclosed and forms an essential part of that description, by way of illustrating it but not in an exhaustive way.

### BRIEF DESCRIPTION OF THE DRAWINGS

Figure 1.- This shows a diagram of the layout of the Remote Claim Adjustment System.
Figure 2.- This shows a view in perspective of the Remote Claim Adjustment System.

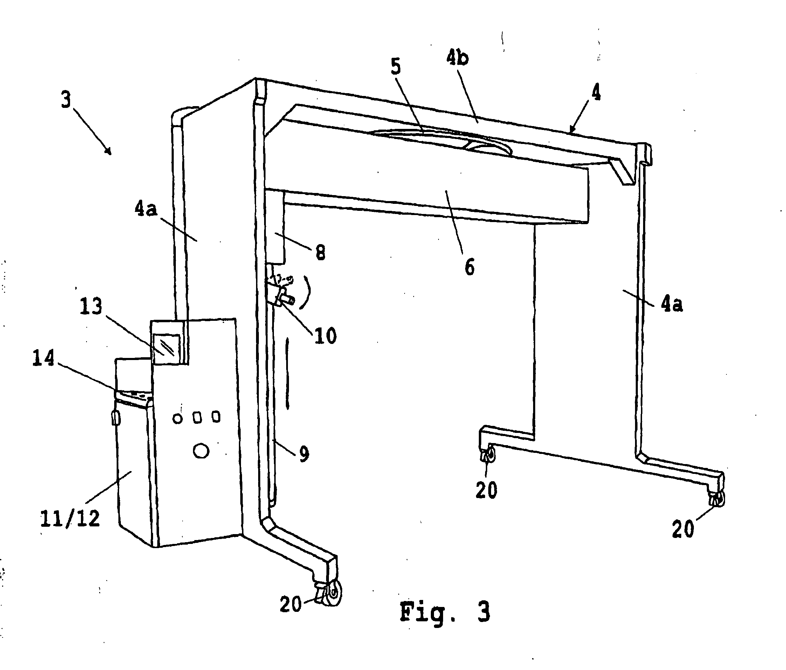

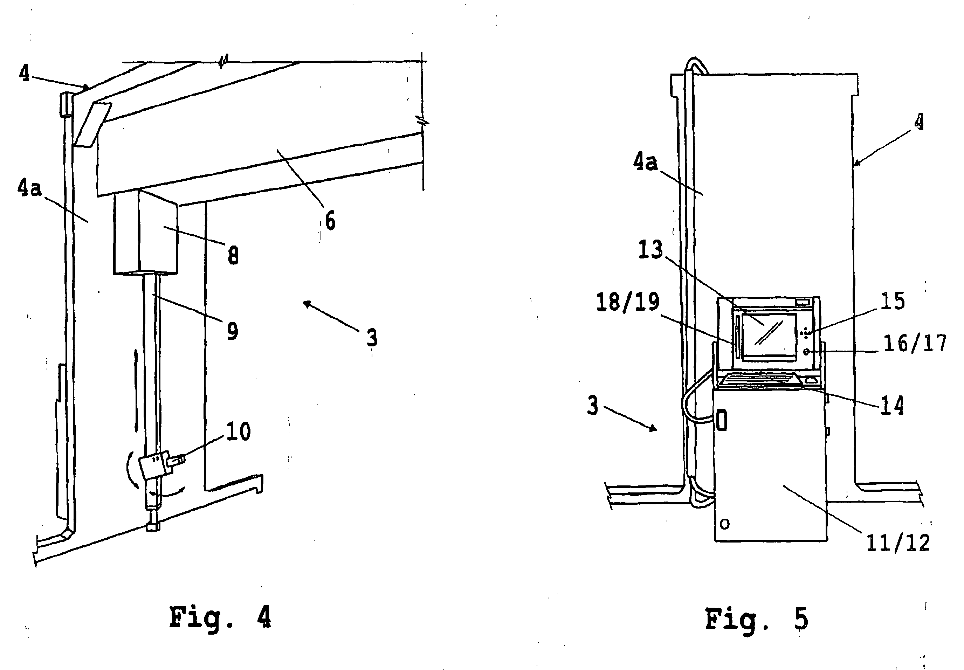

Figures 3 and 4.- These show two views of the Remote Claim Adjustment System.
Figure 5.- This shows a side view of the elevation of the Remote Claim Adjustment System.

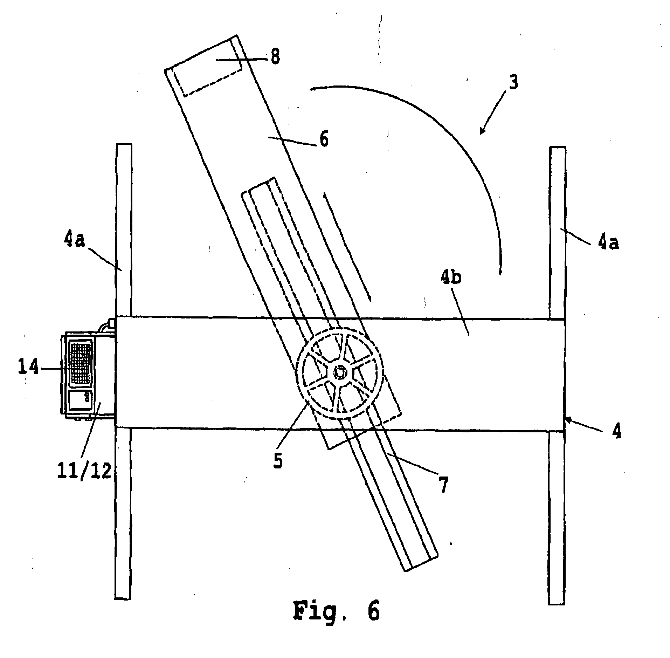

Figure 6.- Finally, this figure shows a plan view of the Remote Claim Adjustment System.

### REALISATION OF A PREFERRED EMBODIMENT OF THE INVENTION

In the light of the figures that are referred to above and in accordance with the numbering sequence that has been adopted, the realisation of a preferred embodiment of the invention can be seen, although this is in no way exhaustive, and it consists of a Remote Claim Adjustment System that comprises the following elements:

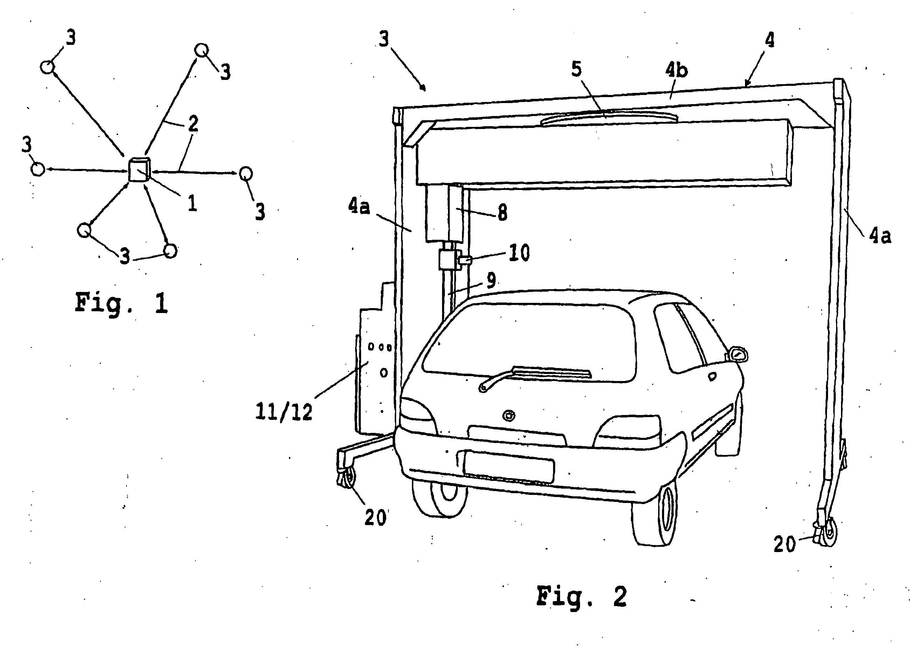

A central server or Call-Centre (1) that is equipped with all the technical equipment and communications equipment that is needed for remote control and communication that, by means of the communications network (2) that basically uses the ISDN telephone line in order to comply better with the requirements of the system for sending files in video format ( OFF-line system ), which sends images in real time ( ON-line system) but that can also use any other system that is suitable for that purpose, this Call-Centre being where the adjuster or adjusters will be when they remotely control one or several of the Remote Claim Adjustment Platforms (3) located at different sites, as can be seen in the diagram that is shown in Figure 1.

As can be seen in the rest of the figures, the aforementioned Remote Claim Adjustment Platform comprises a structure in the form of a bridge (4) made up of two side panels (4a) that are joined at the top to a transversal platform (4b), the lower part of which is equipped with a rotating wheel device (5) that is operated by means of conventional electromechanical systems, which operates an arm (6), the inside of which contains an extendable systems of guides (7), which enable it to rotate full circle (360°) and allow it to be considerably elongated. An element (8) equipped with a vertical guide (9) is attached to the lower part of one of the ends of the above-mentioned arm (6), and a video camera (10) can be easily attached to or removed from the vertical guide (9) if necessary; this video camera can revolve both horizontally and vertically around its own axis and can also move up and down the aforementioned guide (9); this video camera (10) has its own lighting system and is also equipped with a distance control gauge, which prevents it from moving too close to the vehicle, and this also enables it to reach any angle of the vehicle for adjustment purposes.

All of the above, that is to say, not only the mobility of the camera (10) but also the control over the zoom or the way that it makes its approach, and also the way in which the arm (6) extends and rotates, are wired up to a computer terminal (11), which is located in a convenient zone (12) at the top of one of the side panels (4a) of the structure (4), which is equipped with suitable hardware and software systems that contain their own server system that can be connected up to the Call-Centre (1) via the communications network (2), from which it is handled.

This computer terminal (11) is also equipped with a series of elements such as a screen or display (13), a keyboard (14), a loudspeaker (15), a microphone (16) with an automatic telephone dialling system (17), a printer (18) and a scanner (19), which provide complete visual, acoustic and written communication.

Furthermore, the two side panels (4a) at the bottom of the structure in the form of a bridge (4) are provided with two pairs of rotating wheels (20) that make the Remote Claim Adjustment Platform mobile, in case it happens to be necessary to move it.

The scope of the invention is defined by the appended claims

## Claims

1. A surveying system for remote controlled video recording comprising a central server referred to as a Control-Centre (1) that via a Communications network (2) controls at least one Remote Claim Adjustment Platform (3) which is equipped with a structure in the form of a bridge (4) consisting of two side panels (4a) that are joined at the top to a transversal platform (4b), the lower part of which is equipped with a horizontal rotating wheel device (5) that is operated by means of conventional electromechanical systems and which enables an arm (6) to rotate 360°, the inside of said arm containing an extendable system of guides (7) which allows the elongation of said arm;
Said arm further having attached to the lower part of one of its ends an element (8) equipped with a vertical guide (9), and a video camera (10) which is removably attached to the vertical guide (9), this video camera (10) also having its own lighting system and a distance control sensor.

2. A surveying system for remote controlled video recording, as in the first claim, comprising a computer terminal (11) located in a zone (12) attached to the outside of one of the side panels (4a) of the aforementioned Remote Claim Adjustment Platform (3), said computer terminal being equipped with suitable hardware and software means and being connectable to the Control-Centre (1) via the communications network (2), for operating its mobile parts electromechanically and for controlling the operation of the camera focus and zoom, as well as the pickup and the processing of the image.

3. A surveying system for remote controlled video recording, as in the second claim, which is **characterised by** the fact that this computer terminal (11) is also equipped with a screen or display (13), a keyboard (14), a loudspeaker (15), a microphone (16) with an automatic telephone dialling system (17), a printer (18) and a scanner (19)and said computer terminal (11) is controlled, directed and handled by a claim adjuster from the central server or Control-Centre (1) by remote control in real time.

4. A surveying system for remote controlled video recording, as in the first claim, which is **characterised by** the fact that the aforementioned Remote Claim Adjustment Platform (3) is mobile because the structure in the form of a bridge (4) is equipped with two pairs of rotating wheels (20) positioned at the bottom of the two side panels (4a).

## Patentansprüche

1. Ein Überwachungssystem zur ferngesteuerten Videoaufnahme, das einen Zentralserver umfasst, auf den als Kontrollzentrum (1) Bezug genommen wird, der über ein Kommunikationsnetzwerk (2) wenigstens eine Plattform zur ferngesteuerten Schadensaufnahme (3) steuert, der mit einem brückenförmigen Aufbau (4) ausgestattet ist, der aus zwei Seitenplatten (4a) besteht, die oben durch eine Querplattform (4b) verbunden sind deren unterer Teil mit einer waagrechten Drehachsenvorrichtung (5) ausgestattet ist die durch herkömmliche elektromechanische Systeme angetrieben wird und einen Arm (6) zur 360°-Drehung bringt, wobei dieser Arm innen ein ausfahrbares Führungssystem (7) aufweist, das die Verlängerung dieses Arms ermöglicht;
Am unteren Teil dieses Arms ist ferner an einer seiner Enden ein Element (8) befestigt, das mit einer senkrechten Führung (9) und einer Videokamera (10) ausgestattet ist, die an der senkrechten Führung (9) abnehmbar befestigt ist, wobei diese Videokamera (10) auch ihr eigenes Beleuchtungssystem und einen Sensor zur Entfernungskontrolle hat.

2. Ein Überwachungssystem zur ferngesteuerten Videoaufnahme wie im ersten Patentanspruch, das einen Computerterminal (11) umfasst, der sich in einem Bereich (12) befindet, der mit der Außenseite einer der Seitenplatten (4a) der oben erwähnten Plattform zur ferngesteuerten Schadensaufnahme (3) verbunden ist, wobei dieser Computerterminal mit geeigneten Hardware- und Software-Mittehl ausgestattet und über das Kommunikationsnetzwerk (2) an das Kontrollzentrum (1)anschließbar ist, um seine beweglichen Teile elektromechanisch anzutreiben und um den Betrieb der Scharfeinstellung und des Zooms der Kamera, sowie die Aufnahme und Verarbeitung des Bildes zu steuern.

3. Ein Überwachungssystem zur ferngesteuerten Videoaufnahme wie im zweiten Patentanspruch, das sich durch die Tatsache kennzeichnet, dass dieser Computerterminal (11) auch mit einem Bildschirm oder Display (13), einer Tastatur (14) einem Lautsprecher (15) einem Mikrotom (16) mit einem automatischen Telefonwahlsystem (17), einem Drucker (18) und einem Scanner (19) ausgestattet ist und besagter Computerterminal (11) durch einen Schadensaufnehmer vom Zentralserver oder Kontrollzentrum (1) aus ferngesteuert in Echtzeit kontrolliert, gesteuert und gehandhabt wird.

4. Ein Überwachungssystem zur ferngesteuerten Videoautnahme wie im ersten Patentanspruch das sich durch die Tatsache kennzeichnet, dass die oben erwähnte Plattform zur ferngesteuerten Schadensaufnahme (3) beweglich ist, weil der bruckenförmige Aufbau (4) mit jeweils zwei Drehachsen (20) ausgestattet ist, die sich am Boden der beiden Seitenplatten (4a) befinden.

## Revendications

1. Un système d'expertise dans lequel est utilisé un enregistrement vidéo commandé à distance comprenant un serveur central auquel il est fait référence comme un Centre de Contrôle (1) qui, via un réseau de Communications (2), contrôle au moins une Plate-forme d'expertise à distance (3) qui est équipée d'une structure en forme de pont (4) consistant en deux panneaux latéraux (4a) qui sont unis en haut à une plate-forme transversale (4b), dont la partie inférieure est équipée d'un dispositif de roues horizontales (5) qui est manoeuvré au moyen de systèmes électro-mécaniques conventionnels et qui permet à un bras (6) de tourner de 360°, l'intérieur du dit bras contenant un système extensible de guides (7) qui permettent l'élongation du dit bras ;
Le dit bras ayant de plus, fixé sur la partie inférieure de l'une de ses extrémités, un élément (8) équipé d'un guide vertical (9) et une caméra vidéo (10) amovible fixée sur le guide vertical (9), cette caméra vidéo (10) ayant également son propre système d'éclairage et un capteur de télécommande.

2. Un système d'expertise dans lequel est utilisé un enregistrement vidéo commandé à distance, comme dans la première revendication, comprenant un terminal informatique (11) placé dans une zone (12) fixée à l'extérieur de l'un des panneaux latéraux (4a) de la Plate-forme d'expertise à distance (3) susmentionnée, ledit terminal informatique étant équipé de moyens matériels et logiciels adéquats et étant connectable au Centre de Contrôle (1) via le réseau de communications (2) pour manoeuvrer ses pièces mobiles électro-mécaniquement et pour contrôler l'opération de mise au point et de zoom de la caméra ainsi que l'analyse et le traitement de l'image.

3. Un système d'expertise dans lequel est utilisé un enregistrement vidéo commandé à distance, comme dans la deuxième revendication, qui est **caractérisé par le fait que** ce terminal informatique (11) est également équipé d'un écran ou d'un affichage (13) d'un clavier (14) d'un haut-parleur (15) d'un microphone (16) avec un système automatique de composition de numéros de téléphone (17), d'une imprimante (18) et d'un scanner (19) et que le dit terminal informatique (11) est contrôlé, dirigé et manoeuvré par un expert à partir du serveur central ou du Centre de Contrôle (1) par télécommande en temps réel.

4. Un système d'expertise dans lequel est utilisé un enregistrement vidéo commandé à distance, comme dans la première revendication, qui est **caractérisé par le fait que** la Plate-forme d'expertise à distance (3) est mobile car la structure en forme de pont (4) est équipée de deux paires de roues (20) placées dans le bas des panneaux latéraux (4a).
